# EUROPÄISCHE PATENTSCHRIFT

(11) **EP 2 146 841 B1**
(45) Veröffentlichungstag und Bekanntmachung des Hinweises auf die Patenterteilung: **17.06.2015**
(21) Anmeldenummer: 08758378.7
(22) Anmeldetag: 05.05.2008
(51) Int. Cl.: B32B 3/12, B32B 5/16, E04C 2/36, E04C 2/34, A47B 96/20

(54) **LEICHTBAUPLATTE**
LIGHTWEIGHT BUILDING PANEL
PANNEAU DE CONSTRUCTION LÉGER

(30) Priorität: 08.05.2007 DE 202007006780 U
(43) Veröffentlichungstag der Anmeldung: 27.01.2010
(73) Patentinhaber: Rehau AG + Co, 95111 Rehau (DE)
(72) Erfinder: BAUER, Dieter, 95213 Münchberg (DE); JOACHIMMEYER, Daniel, 49124 Georgsmarienhütte (DE)
(86) Internationale Anmeldenummer: PCT/EP2008/003577
(87) Internationale Veröffentlichungsnummer: WO 2008/135252

(56) Entgegenhaltungen:
- EP-A- 1 698 738
- DE-U1-202006 003 857

## Beschreibung

Die Erfindung betrifft eine Leichtbauplatte mit zumindest zwei Decklagen und zumindest eine zwischen den Decklagen angeordnete Kernlage, wobei eine Profilleiste an zumindest einer der Schmalseiten der Leichtbauplatte befestigbar und auf der Profilleiste wenigstens eine Deckleiste befestigbar ist.

Derartige Leichtbauplatten werden auch als Verbundbauplatten oder Sandwichplatten bezeichnet und sind vielseitig beispielsweise im Möbelbau einsetzbar. Die Deckschichten bzw. die Decklagen werden dabei vorzugsweise von verhältnismäßig dünnen Platten aus bekannten Holzwerkstoffen wie z. B. Spanplatten oder sogenannte MDF-Platten und dergleichen gebildet. Die Deckschichten bzw. Decklagen können mehrlagig bzw. mehrschichtig ausgebildet sein, wobei die Kernschicht beispielsweise als sogenannte Wabenstruktur aus beispielsweise Papier oder Pappe hergestellt ist, welche mittels bekannten Klebstoffsystemen mit den Deckschichten bzw. Decklagen verbunden ist.
Bei der Herstellung der bekannten Leichtbauplatten ist es erforderlich, dass die Schmalseiten mit Deckleisten versehen werden, um diese vor eindringenden äußeren Einflüssen zu schützen.
Dazu werden beispielsweise Profilleisten aus Holzwerkstoffen, aber auch aus thermoplastisch verarbeitbaren Werkstoffen eingesetzt. Während bei der Befestigung von derartigen Profilleisten an massiven Platten aus Holzwerkstoffen wie beispielsweise Spanplatten, Tischplatten und dergleichen eine ausreichende Fläche an den Schmalseiten zur Verfügung steht, ist die Befestigung von derartigen Profilleisten an Leichtbauplatten mit einer Kernschicht aus einer Wabenstruktur aus Pappe bzw. Papier mit Problemen behaftet. Hier ist es üblich, an den Schmalseiten der Leichtbauplatten zunächst Profilleisten zu befestigen, welche dann eine ausreichende Fläche zum Befestigen der eigentlichen Deckleisten bieten.

Aus der DE 19506158 A1 ist eine gattungsgemäße Leichtbauplatte bekannt, bei der ein Kern von zumindest zwei Platten an zwei seiner Seiten abgedeckt ist. Diese Leichtbauplatte weist an ihren Längsstirnseiten ein Halte- und Abschlussprofil auf, welches ein Basisteil mit einer Sicht- bzw. Anschlussfläche und einer dieser gegenüberliegende Abdeckfläche aufweist und mit einer Verankerungseinrichtung, die an der Abdeckfläche angeordnet ist und im Montagezustand in den Kern der Leichtbauplatte eingreift. Dieses Halte- und Abschlussprofil wird in die Längsstirnseiten der Leichtbauplatte eingepresst, wobei der Kern der Leichtbauplatte an dieser Stelle beschädigt ist und das Halte- und Abschlussprofil über den an der Verankerungseinrichtung angeordneten Klebstoff mit den Decklagen der Leichtbauplatte verklebt ist.
Bei diesem Halte- und Abschlussprofil ist es jedoch nachteilig, dass für jede Geometrie bzw. Raumform der Leichtbauplatte, insbesondere abhängig von der Dicke und vor allem der Toleranz der Decklagen separate Halte- und Abschlussprofile hergestellt werden müssen.
Ein weiterer Nachteil bei dieser Leichtbauplatte wird darin gesehen, dass durch das Eindrücken der Verankerungseinrichtung in die Kernlage der Leichtbauplatte ein Aufspreizen bzw. Aufdehnen der Decklagen der Leichtbauplatte erfolgt, welches beispielsweise unterschiedlichen Toleranzen der Verankerungseinrichtung und unterschiedlichen Abständen der einzelnen Decklagen zugeordnet werden muss. Weiterhin nachteilig wird gesehen, dass diese Lösung zu einem möglichen Ablösen der Kernlage von einer oder beider Decklagen führt.

Eine weitere gattungsgemäße Leichtbauplatte ist in der DE 202000003857 U1 beschrieben Diese Leichtbauplatte weist zumindest zwei Deckschichten und zumindest eine zwischen den Deckschichten angeordnete Kernschicht auf, wobei die Profilleiste an zumindest einer der Schmalseiten der Leichtbauplatte befestigbar und wobei auf der Profilleiste eine Deckleiste befestigbar ist. Diese Leichtbauplatte soll sich durch niedrige Herstellungs- und Montagekosten auszeichnen und eine einwandfreie Befestigung der Deckleiste ermöglichen. Gelöst werden soll dieses Problem dadurch, dass die Profilleiste als zumindest bereichsweise perforierte Profilleiste mit zumindest einer aus einer Vielzahl von Durchbrechungen bestehenden Perforation ausgebildet ist. Diese Durchbrechungen sollen sich über die gesamte Dicke der Profilleiste erstrecken, so dass diese Perforation bei Verklebung der Deckleiste eine verbesserte Haftung an der Profilleiste bewirken soll.

Nachteilig bei dieser Leichtbauplatte wird gesehen, dass insbesondere beim Anbringen der Deckleiste an die in der Schmalseite befestigte Profilleiste die Profilleiste vertikal und die Decklagen der Leichtbauplatte horizontal angeordnet sind. Beim Auftrag von Kleber zum Befestigen der Deckleiste über an sich bekannte Walzen bzw. Düsen wird der Kleber in einer wirtschaftlich vertretbaren dünnen Schicht auf die nach außen weisende Seite der Profilleiste aufgetragen. Der Kleber weist hierzu eine entsprechend hohe Viskosität auf, so dass er nicht von den Schmalseiten der Leichtbauplatte herabtropft, bevor die Deckleiste angebracht ist. Somit kann der Kleber aufgrund seiner chemischen Eigenschaften sowie der Erdanziehungskraft nicht in die horizontal angeordneten Durchbrechungen eindringen, so dass durch die Vielzahl der Öffnungen die Klebefläche der Profilleiste an sich verringert wird und die Deckleiste somit keine ausreichende Haftung an der darunterliegenden Profilleiste aufweist.
Dies führt nachteiligerweise dazu, dass bei bestimmungsgemäßem Gebrauch der Leichtbauplatte in den Spalt zwischen der Deckleiste und den Decklagen der Leichtbauplatte Feuchtigkeit eindringen kann und dass beispielsweise bei mechanischer Belastung die Deckleiste sich von der Profilleiste der Leichtbauplatte ablöst. Ein weiterer Nachteil der Leichtbauplatte wird darin gesehen, dass die Herstellung derart perforierter Profilleisten teuer und unwirtschaftlich ist und selbst bei einem möglichen Einsatz von beispielsweise Recyclingmaterial thermoplastischer Werkstoffe die Grundfestigkeit und damit die eigentliche Funktion der Profilleiste erheblich beeinträchtigt ist.
Die EP 1698738 A2 beschreibt eine Leichtbauplatte mit zwei dünnwandigen Decklagen und mindestens einer zwischen den Decklagen angeordneten und mit dieser verbundenen Kernlage sowie ein Verfahren zu ihrer Herstellung.
Das Verfahren zur Herstellung der Leichtbauplatte ist gekennzeichnet durch einen ersten Verfahrensschritt, bei dem eine Nut in wenigstens eine der Längsstirnseite der Leichtbauplatte eingebracht wird, wobei in einem zweiten Verfahrensschritt eine Profilleiste in die Nut der Leichtbauplatte eingebracht wird und in einem dritten Schritt eine weitere Profilleiste auf die vorher eingebrachte Profilleiste aufgebracht wird.
Es wird weiterhin offenbart eine Leichtbauplatte mit zwei dünnwandigen Decklagen und mindestens einer zwischen den Decklagen angeordneten und mit dieser verbundenen Kernlage, wobei in wenigstens eine Längsstirnseite der Leichtbauplatte eine Nut einbringbar ist, dass in die Nut eine Profilleiste einbring bar ist und auf die Profilleiste eine weitere Profilleiste aufbringbar ist.

Hier setzt die Erfindung ein, die sich zur Aufgabe gestellt hat, die Nachteile des bekannten Standes der Technik zu überwinden und eine Leichtbauplatte aufzuzeigen, die kostengünstig und wirtschaftlich herstellbar ist, deren Längsstirnseiten dauerhaft geschützt bzw. versiegelt sind und bei der eine normgerechte und dauerhafte Haftung der Deckleiste auf der Profilleiste realisierbar ist.

Erfindungsgemäß wird dies durch die Merkmale des Anspruches 1 gelöst, weitere vorteilhafte Ausgestaltungen sind in den Unteransprüchen beschrieben.

Überraschend ist festgestellt worden, dass bei dem Einsatz einer Profilleiste und/oder einer Deckleiste aus einem thermoplastisch verarbeitbaren Werkstoff, der wenigstens cellulosische und/oder lignocellulosische Teilchen in einer Menge von 3 bis zu 85 %, vorzugsweise 10 bis zu 45 %, bezogen auf die Gesamtmasse, eingelagert enthält, die Affinität zwischen den Holzwerkstoffen der Decklagen und der Profilleiste und/oder der Deckleiste optimiert sind und so eine überraschend hohe Haftfestigkeit aufweist.
Insbesondere beim Einsatz von Profilleisten in Leichtbauplatten, bei denen in die Stirnseiten der Decklagen Nuten eingebracht worden sind zur Aufnahme der Profilleiste, lässt sich einerseits eine erhöhte Haftfestigkeit der Profilleiste im Holzwerkstoff der Decklagen verzeichnen, während auf der den Nuten gegenüberliegenden Seite der Profilleiste durch die eingelagerten cellulosischen und/oder lignocellulosischen Teilchen eine strukturierte Oberfläche entsteht, die eine bessere Haftung mit der Deckleiste bewirkt.
Ein weiterer Vorteil der erfindungsgemäßen Leichtbauplatte wird darin gesehen, dass der Werkstoff der Profilleiste und/oder der Deckleiste über seinen gesamten Querschnitt in räumlich gleichmäßiger Verteilung wenigstens cellulosische und/oder lignocellulosische Teilchen in einer Menge von 3 bis zu 85 %, vorzugsweise 10 bis zu 45 %, bezogen auf die Gesamtmasse, eingelagert enthält.
Diese vorteilhafte Ausführungsform eignet sich insbesondere dann für hohe Haftfestigkeiten zwischen der Profilleiste und der Deckleiste, wenn die in die Schmalseite der Leichtbauplatte befestigte Profilleiste nachträglich über ihre gesamte, der Nut der Decklage gegenüberliegenden Oberfläche, nachbearbeitet, beispielsweise gefräst ist, und somit die in dem Werkstoff der Profilleiste eingebrachten cellulosischen und/oder lignocellulosischen Teilchen freigelegt werden und somit zu einer besseren Verklebung führen, da dadurch insbesondere die Menge des einzusetzenden an sich bekannten Klebstoffes optimierbar ist. Somit lässt sich die erfindungsgemäße Leichtbauplatte kostengünstig und wirtschaftlich auch vollautomatisch herstellen, bei normgerechter bzw. ausreichender Haftfestigkeit zwischen der Profilleiste und den Decklagen sowie zwischen der Profilleiste und der Deckleiste.

Ein weiterer Verteil der erfindungsgemäßen Leichtbauplatte bestecht darin, dass der Werkstoff der Profilleiste und/oder der Deckleiste wenigstens cellulosische und/oder lignocellulosische Teilchen in einer Menge von 3 bis zu 85 %, vorzugsweise 10 bis zu 45 %, bezogen auf die Gesamtmasse, eingelagert enthält, welche vorzugsweise in dem der Klebefläche der Profilleiste und/oder der Deckleiste zugewandten Bereich konzentriert sind.

Es hat sich weiterhin als vorteilhaft herausgestellt, dass die cellulosischen und/oder lignocellulosischen Teilchen bevorzugt aus Nadelholz bestehen, insbesondere aus Fichte, Kiefer, Tanne, Lärche, Eibe, Zeder, Redwood, Pinie, Zypresse, Douglasie und Sequoria oder einer Mischung der vorgenannten Hölzer.
Die Teilchen weisen eine Teilchengröße zwischen 10 und 20.000 µm auf, mit einem Hälufigkeitsmaximum der Teilchengrößenverteilung im Bereich zwischen 100 und 450 µm.

Es liegt jedoch auch im Rahmen der Erfindung, dass die Teilchen cellulosische und /oder lignocellulosische Fasern mit einer maximalen Faserlänge von etwa 20 mm sind. Weiterhin vorteilhaft wird gesehen, dass die Teilchen mit einer Faserlänge kleiner 1.500 µm ein durchschnittliches Aspektverhältnis zwischen Länge und Durchmesser von grösser 2:1 aufweisen. Dies führt vorteilhafterweise dazu, dass das Basismaterial der Profilleiste und/oder der Deckleiste höhere E-Moduli bzw. Steifigkeiten aufweist, was insbesondere die abstützende Funktion der Profilleiste in der erfindungsgemäßen Leichtbauplatte weiter verbessert.
Ein weiterer Vorteil der erfindungsgemäßen Leichtbauplatte wird darin gesehen, dass bei Einsatz von cellulosischen und/oder lignocellulosischen Teilchen die für die Abstützung erforderliche Dicke der Profilleiste reduziert werden kann, bei gleichbleibender bzw. besserer Abstützfunktion und somit die Leichtbauplatte noch wirtschaftlicher herstellbar ist.

Ein weiterer Vorteil der erfindungsgemäßen Leichtbauplatte wird darin gesehen, dass die Teilchen mit einer Faserlänge grösser 1.500 µm etwa eine Dicke von höchstens 750 µm aufweisen. Weiterhin vorteilhaft wird gesehen, dass die Teilchen einen Feuchtigkeitsgehalt von höchstens 10 Gew.-%, bevorzugt 0,5 bis 7 Gew.-% aufweisen. Somit wird eine wirtschaftliche Herstellung der Profilleiste und/oder der Dekorleiste ermöglicht, was wiederum die Wirtschaftlichkeit der erfindungsgemäßen Leichtbauplatte positiv beeinflusst.

Um die Festigkeit der beispielsweise adhäsiven Verbindung zwischen der Profilleiste und/oder der Deckleiste sowie den Nuten der Decklagen der Leichtbauplatte zu erhönen, werden an sich bekannte Haftvermittlersysteme eingesetzt. Diese sind insbesondere bei der Verwendung von Profilleisten und/oder Deckleisten aus thermoplastisch verarbeitbaren Werkstoffen ausgewählt aus der Gruppe der PVC- Copolymere, Polyurethane und dergleichen.
Es hat sich vorteilhafterweise gezeigt, dass durch den Einsatz und die Verwendung von Profilleisten und/oder Deckleisten aus thermoplastisch verarbeitbaren Werkstoffen derartige Leichtbauplatten kostengünstig herstellbar und die Längsstirnseiten schnell, fest und dichtend verschließbar sind.
Durch die Verwendung von Profilleisten und/oder Deckleisten aus der Gruppe der Polyolefine, Polystyrole, Styrol-Copolymere, Polyvinylchloride, Polycarbonate, Polyester, Polyamide, Ethylvinylacetate, Polyethylentherephthalate oder ähnlichen oder Mischungen all der vorgenannten Materialien kann die erfindungsgemäße Leichtbauplatte wirtschaftlich und kostengünstig hergestellt und an jedes spezielle Anforderungsprofil ausgerichtet werden. Somit ist es für die erfindungsgemäße Leichtbauplatte möglich, sogenannte Freiformen wie beispielsweise abgerundete Ecken, kreisförmige bzw. ovale Anordnungen herzustellen, die an ihren Schmalseiten abstützend, dichtend und dekorativ verschließbar sind.

Es hat sich weiter überraschend herausgestellt, dass sich bei Einsatz einer Profilleiste, welche eine geringere Dichte als die Deckleiste aufweist, beispielsweise bei einem Verhältnis der Dichte der Profilleiste zur Dichte der Deckleiste von wenigstens 0,1, ein ausgewogenes Preis-Leistungs-Verhältnis der einzusetzenden thermoplastisch verarbeitbaren Werkstoffe mit den dadurch erzielbaren mechanischen Eigenschaften ergibt.
Die erfindungsgemäße Leichtbauplatte ist insbesondere durch die Kombination des Einsatzes einer Profilleiste und/oder einer Deckleiste mit cellulosischen und/oder lignocellulosischen Teilchen und einer Dichte des thermoplastisch verarbeitbaren Materials von etwa 0,20 g/cm³ bis etwa 0,85 g/cm³, vorzugsweise 0,40 g/cm³ bis 0,70 g/cm³, ein optimales Preis-Leistungs-Verhältnis bei optimierter Stützwirkung bzw. Haftfestigkeit auszeichnet.

Es liegt nicht im Rahmen der Erfindung, dass Leichtbauplatten umfasst sind, bei denen die Decklagen aus Kunststoffen bzw. Metall hergestellt sind, die beispielsweise auch mehrlagig bzw. mehrschichtig ausgebildet sind.

Die erfindungsgemäße Leichtbauplatte soll nun anhand eines die Erfindung nicht einschränkenden Ausführungsbeispiels näher beschrieben werden.

Es zeigt:

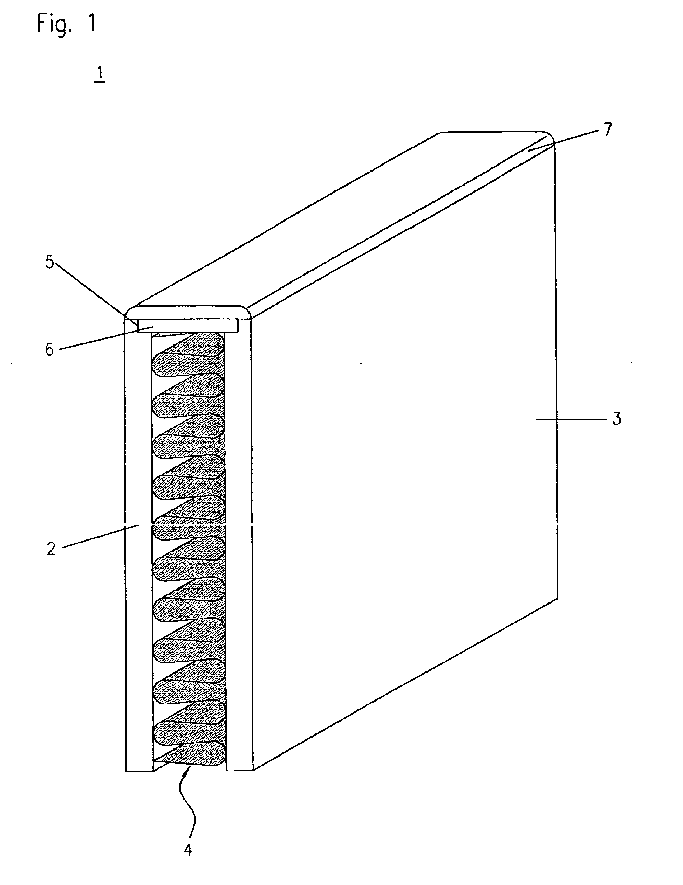

- Fig. 1:: Perspektivische Darstellung einer erfindungsgemäßen Leichtbauplatte.

In Fig. 1 ist eine perspektivische Darstellung einer erfindungsgemäßen Leichtbauplatte 1 dargestellt. Die Leichtbauplatte 1 weist einen viereckigen Querschnitt auf und besteht in diesem Ausführungsbeispiel aus den zwei sich gegenüberliegenden Decklagen 2, 3, welche in etwa parallel zueinander angeordnet sind.
Zwischen den Decklagen 2, 3 ist eine mit diesen verbundene Kernlage 4 angeordnet, welche in diesem Ausführungsbeispiel eine etwa im Querschnitt S-förmige Struktur aufweist und wobei diese Kernlage 4 beispielsweise aus Papier oder ähnlichen Materialien hergestellt sein kann. In eine Stirnseite der Leichtbauplatte 1 wurde eine Nut 5 in die Decklagen 2, 3 eingebracht, welches durch eine an sich bekannte Fräsung erfolgt. Die Profilleiste 6 wurde in die Nut 5 der Decklagen 2, 3 der Leichtbauplatte 1 adhäsiv über an sich bekannte Klebstoffsysteme eingefügt und stützt somit die Decklagen 2, 3 gegeneinander ab.
Die Profilleiste 6 ist in diesem Ausführungsbeispiel aus einem thermoplastisch verarbeitbaren Werkstoff wie einem Styrol-Copolymer hergestellt und weist über seinen gesamten Querschnitt in räumlich gleichmäßiger Verteilung lignocellulosische Teilchen in einer Menge von ca. 20 Gew.-%, bezogen auf die Gesamtmasse, auf. In diesem Ausführungsbeispiel wurde die Profilleiste 6 an ihrer nach außen weisenden Oberfläche nachträglich vollflächig abgefräst, so dass eine zu den Decklagen 2, 3 der Leichtbauplatte 1 rechtwinklig und plan angeordnete Klebefläche vorhanden ist, auf der die Deckleiste 7 aufbringbar ist.
Durch die mechanische Bearbeitung der Profilleiste 6 wurden die im Werkstoff der Profilleiste 6 angeordneten lignocellulosischen Teilchen zum Teil aus dem Werkstoff herausgerissen, so dass Öffnungen für das Klebstoffsystem entstanden bzw. von dem sie umgebenden thermoplastischen Werkstoff freigelegt sind. Auf diese vorbereitete Klebefläche wird mittels an sich bekannter Klebstoffsysteme nun die Deckleiste 7 eingebracht, welche in diesem Ausführungsbeispiel vorzugsweise an ihrer der Profilleiste 6 zugewandten Klebefläche cellulosische Teilchen in einer Menge von ca. 10 %, bezogen auf die Gesamtmasse, eingelagert enthält.
Durch die Wahl des Schmelzklebers werden die in der Profilleiste 6 und/oder der Deckleiste 7 angeordneten cellulosischen und/ oder lignocellulosischen Teilchen aufgrund ihrer besseren Affinität zum Schmelzkleber zu einer höheren Haftfestigkeit der Deckleiste 7 an der Profilleiste 6 führen.
Insbesondere unterschiedliche Teilchengrößen der cellulosischen und/oder lignocellulosischen Teilchen in der Profilleiste 6 und/oder der Deckleiste 7 führen zu variierbaren Haftfestigkeiten in Abhangigkeit von der Klebstoffmenge zwischen der Profilleiste 8 und der Deckleiste 7.
Ein weiterer Vorteil der erfindungsgemäßen Leichtbauplatte 1 wird darin gesehen, dass bei Verwendung eines thermoplastisch verarbeitbaren Werkstoffes für die Profilleiste 6, welche eine geringere Dichte als die Deckleiste 7 aufweist, die Haftfestigkeit zwischen der Profilleiste 6 und der Deckleiste 7 noch weiter erhöht werden kann. Dies ist darauf zurückzuführen, dass insbesondere bei einer in der Schmalseite der Leichtbauplatte 1 eingebrachten Profilleiste 6, welche sowohl cellulosische und/oder lignocellulosische Teilchen in einer Menge von 3 bis zu 85 %, vorzugsweise 10 bis zu 45 %, bezogen auf die Gesamtmasse, eingelagert enthält und wobei die Dichte der Profilleiste 6 einen Wert von etwa 0,2 g/cm³ bis etwa 0,85 g/cm³ aufweist, vorzugsweise 0,40 g/cm³ bis 0,70 g/cm³ durch das nachträgliche Abfräsen der Klebefläche der Profilleiste 6 eine löchrigporöse Struktur entsteht, die Öffnungen bedingt durch das thermoplastisch verarbeitbare Material der Profilleiste 6, aber auch zusätzlich freigelegte cellulosische und/oder lignocellulosische Teilchen enthält, die zu einer besseren Verankerung und optimalen Haftfestigkeit zwischen der Profilleiste 6 und der Deckleiste 7 führen.

Ein weiterer Vorteil der erfindungsgemäßen Leichtbauplatte 1 wird gesehen, dass bei der Verwendung eines Werkstoffes der Profilleiste 6 und/oder der Deckleiste 7, welcher wenigstens cellulosische und/oder lignocellulosische Teilchen in einer Menge von 3 bis zu 85 %, vorzugsweise 10 bis zu 45 %, bezogen auf die Gesamtmasse, eingelagert enthält, die in der Möbelindustrie verwendeten Werkzeuge für die Bearbeitung von beispielsweise Möbelbauplatten aus Holzwerkstoffen verwendet werden können, so dass die Wirtschaftlichkeit der erfindungsgemäßen Leichtbauplatte wiederum positiv beeinflusst ist.

## Patentansprüche

1. Leichtbauplatte mit zumindest zwei Decklagen (2,3), wobei die Decklagen (2, 3) dabei von Platten aus bekannten Holzwerkstoffen wie z.B. Spanplatten oder sogenannten MDF- Platten gebildet sind, und zumindest eine zwischen den Decklagen (2,3) angeordnete Kernlage (4), wobei eine Profilleiste (6) an zumindest einer der Schmalseiten der Leichtbauplatte (1) befestigbar und auf der Profilleiste (6) wenigstens eine Deckleiste (7) befestigbar ist, dass die Profilleiste (6) und/oder die Deckleiste (7) aus einem thermoplastisch verarbeitbaren Werkstoff besteht und das die Profilleiste (6) und/oder die Deckleiste (7) mit den Decklagen (2, 3) aus Holzwerkstoffen adhäsiv, unter Einsatz von an sich bekannten Haftvermittlern, verbunden ist, **dadurch gekennzeichnet,**
**dass** der Werkstoff der Profilleiste (6) und/oder der Deckleiste (7) wenigstens cellulosische und/oder lignocellulosische Teilchen in einer Menge von 3 bis zu 85 %, vorzugsweise 10 bis zu 45 %, bezogen auf die Gesamtmasse, eingelagert enthält, dass die Teilchen eine Teilchengröße zwischen 10 und 20.000 µm aufweisen, mit einem Häufungsmaximum der Teilchengrößenverteilung im Bereich zwischen 100 und 450 µm.

2. Leichtbauplatte nach Anspruch 1, **dadurch gekennzeichnet, dass** der Werkstoff der Profilleiste (6) und/oder der Deckleiste (7) über seinen gesamten Querschnitt in räumlich gleichmäßiger Verteilung wenigstens cellulosische und/oder lignocellulosische Teilchen in einer Menge von 3 bis zu 85 %, vorzugsweise 10 bis zu 45 %, bezogen auf die Gesamtmasse, eingelagert enthält.

3. Leichtbauplatte nach Anspruch 1, **dadurch gekennzeichnet, dass** der Werkstoff der Profilleiste (6) und/oder der Deckleiste (7) wenigstens cellulosische und/oder lignocellulosische Teilchen in einer Menge von 3 bis zu 85 %, vorzugsweise 10 bis zu 45 %, bezogen auf die Gesamtmasse, eingelagert enthält, welche vorzugsweise in dem der Klebeflächen der Profilleiste (6) und/oder der Deckleiste (7) zugewandten Bereich konzentriert sind.

4. Leichtbauplatte nach Anspruch 1 bis 3, **dadurch gekennzeichnet, dass** die cellulosischen und/oder lignocellulosischen Teilchen bevorzugt aus Nadelholz bestehen, insbesondere aus Fichte, Kiefer, Tanne, Lärche, Eibe, Zeder, Redwood, Pinie, Zypresse, Douglasie und Sequoia oder eine Mischung der vorgenannten Hölzer.

5. Leichtbauplatte nach Anspruch 1 bis 4, **dadurch gekennzeichnet, dass** die Teilchen einen Feuchtigkeitsgehalt von höchstens 10 Gew.-%, bevorzugt zwischen 0,5 und 7 Gew.-% aufweisen.

6. Leichtbauplatte nach Anspruch 1 bis 5, **dadurch gekennzeichnet, dass** die Profilleiste (6) und/oder der Deckleiste (7) aus der Gruppe der Polyolefine, Polystyrole, Styrol-Copolymere, Polyvinylchloride, Polycarbonate, Polyester, Polyamide, Ethylenvinylacetate, Polyethylentherephthalate oder Mischungen der vorgenannten Materialien ausgewählt ist.

7. Leichtbauplatte nach Anspruch 1 bis 6, **dadurch gekennzeichnet, dass** die Profilleiste (6) eine geringere Dichte als die Deckleiste (7) aufweist.

8. Leichtbauplatte nach Anspruch 1 bis 7, **dadurch gekennzeichnet, dass** das Verhältnis der Dichte der Profilleiste (6) zur Dichte der Deckleiste (7) wenigstens 0,1 beträgt.

9. Leichtbauplatte nach Anspruch 1 bis 8, **dadurch gekennzeichnet, dass** die Profilleiste (6) eine Dichte von etwa 0,2 g/cm³ bis etwa 0,85 g/cm³ aufweist, vorzugsweise 0,40 g/cm³ bis 0,70 g/cm³.

## Claims

1. Lightweight construction board having at least two outer plies (2, 3), these outer plies (2, 3) being formed from boards made of known wood-based materials, such as chipboard or what is called MDF board panels, for example, and having at least one core ply (4) disposed between the outer plies (2, 3), where a profile strip (6) can be fastened on at least one of the narrow sides of the lightweight construction board (1), and at least one outer strip (7) can be fastened on the profile strip (6), where the profile strip (6) and/or the outer strip (7) consist of a thermoplastically processible material, and where the profile strip (6) and/or the outer strip (7) are joined adhesively to the outer plies (2, 3) made of wood-based materials, using adhesion promoters that are known per se, **characterized in that** the material of the profile strip (6) and/or of the outer strip (7) incorporates at least cellulosic and/or lignocellulosic particles in an amount of 3% up to 85%, preferably 10% up to 45%, based on the overall mass, and **in that** the particles have a particle size of between 10 and 20 000 µm, with a frequency maximum of the particle size distribution in the range between 100 and 450 µm.

2. Lightweight construction board according to Claim 1, **characterized in that** the material of the profile strip (6) and/or of the outer strip (7) incorporates over its entire cross section in spatially uniform distribution at least cellulosic and/or lignocellulosic particles in an amount of 3% up to 85%, preferably 10% up to 45%, based on the overall mass.

3. Lightweight construction board according to Claim 1, **characterized in that** the material of the profile strip (6) and/or of the outer strip (7) incorporates at least cellulosic and/or lignocellulosic particles in an amount of 3% up to 85%, preferably 10% up to 45%, based on the overall mass, these particles being concentrated preferentially in the region facing the bonding faces of the profile strip (6) and/or of the outer strip (7).

4. Lightweight construction board according to Claims 1 to 3, **characterized in that** the cellulosic and/or lignocellulosic particles consist preferably of softwood, more particularly of spruce, pine, fir, larch, yew, cedar, redwood, stone pine, cypress, Douglas fir and sequoia, or a mixture of the aforesaid woods.

5. Lightweight construction board according to Claims 1 to 4, **characterized in that** the particles have a moisture content of not more than 10 wt%, preferably between 0.5 and 7 wt%.

6. Lightweight construction board according to Claims 1 to 5, **characterized in that** the profile strip (6) and/or the outer strip (7) are selected from the group of polyolefins, polystyrenes, styrene copolymers, polyvinyl chlorides, polycarbonates, polyesters, polyamides, ethylene-vinyl acetates, polyethylene terephthalates or mixtures of the aforesaid materials.

7. Lightweight construction board according to Claims 1 to 6, **characterized in that** the profile strip (6) has a lower density than the outer strip (7).

8. Lightweight construction board according to Claims 1 to 7, **characterized in that** the ratio of the density of the profile strip (6) to the density of the outer strip (7) is at least 0.1.

9. Lightweight construction board according to Claims 1 to 8, **characterized in that** the profile strip (6) has a density of about 0.2 g/cm3 to about 0.85 g/cm³, preferably 0.40 g/cm³ to 0.70 g/cm³.

## Revendications

1. Panneau de construction léger présentant au moins deux couches de recouvrement (2, 3), les couches de recouvrement (2, 3) étant formées de plaques en matériau à base de bois connu, par exemple des panneaux de copeaux ou des panneaux dits MDF, et au moins une couche d'âme (4) disposée entre les couches de recouvrement (2, 3), une languette profilée (6) pouvant être fixée sur au moins l'un des côtés étroits du panneau de construction léger (1) et au moins une languette de recouvrement (7) pouvant être fixée sur la languette profilée (6), la languette profilée (6) et/ou la languette de recouvrement (7) étant constituées d'un matériau apte à être traité en conditions thermoplastiques, et la languette profilée (6) et/ou la languette de recouvrement (7) étant reliées par adhérence aux couches de recouvrement (2, 3) en matériau à base de bois en recourant à des agents en soi connus de renforcement de l'adhérence, caractérisé en ce quedes particules au moins cellulosiques et/ou lignocellulosiques sont incorporées dans le matériau de la languette profilée (6) et/ou de la languette de recouvrement (7) en quantité de 3 à 85 % et de préférence de 10 à 45 % par rapport à la masse totale et en ce que les particules présentent une taille comprise entre 10 et 20 000 µm avec un maximum de fréquence de la répartition granulométrique dans la plage comprise entre 100 et 450 µm.

2. Panneau de construction léger selon la revendication 1, **caractérisé en ce qu'**une répartition spatialement uniforme de particules au moins cellulosiques et/ou lignocellulosiques est incorporée dans toute la section transversale du matériau de la languette profilée (6) et/ou de la languette de recouvrement (7), en quantité de 3 à 85 % et de préférence de 10 à 45 % par rapport à la masse totale.

3. Panneau de construction léger selon la revendication 1, **caractérisé en ce qu'**une répartition spatialement uniforme de particules au moins cellulosiques et/ou lignocellulosiques est incorporée dans toute la section transversale du matériau de la languette profilée (6) et/ou de la languette de recouvrement (7), en quantité de 3 à 85 % et de préférence de 10 à 45 % par rapport à la masse totale et sont concentrées de préférence dans la partie tournée vers la surface adhésive de la languette profilée (6) et/ou de la languette de recouvrement (7).

4. Panneau de construction léger selon les revendications 1 à 3, **caractérisé en ce que** les particules cellulosiques et/ou lignocellulosiques sont constituées de préférence de bois résineux, en particulier d'épicéa, de pin, de sapin, de mélèze, d'if, de cèdre, de pin Redwood, de pin parasol, de cyprès, de pin Douglas, de séquoia ou d'un mélange desdits bois.

5. Panneau de construction léger selon les revendications 1 à 4, **caractérisé en ce que** les particules présentent une teneur en humidité d'au plus 10 % en poids et de préférence comprise entre 0,5 et 7 % en poids.

6. Panneau de construction léger selon les revendications 1 à 5, **caractérisé en ce que** la languette profilée (6) et/ou la languette de recouvrement (7) sont sélectionnées dans l'ensemble constitué des polyoléfines, des polystyrènes, des copolymères de styrène, des poly(chlorure de vinyle), des polycarbonates, des polyesters, des polyamides, des polymères d'éthylène et d'acétate de vinyle, des poly(téréphtalate d'éthylène) ou de mélanges desdits matériaux.

7. Panneau de construction léger selon les revendications 1 à 6, **caractérisé en ce que** la languette profilée (6) présente une masse spécifique plus faible que la languette de recouvrement (7).

8. Panneau de construction léger selon les revendications 1 à 7, **caractérisé en ce que** le rapport entre la masse spécifique de la languette profilée (6) et la masse spécifique de la languette de recouvrement (7) est d'au moins 0,1.

9. Panneau de construction léger selon les revendications 1 à 8, **caractérisé en ce que** la languette profilée (6) présente une masse spécifique d'environ 0,2 g/cm³ à environ 0,85 g/cm³ et de préférence de 0,40 g/cm³ à 0,70 g/cm³.
